# EUROPEAN PATENT SPECIFICATION

(11) **EP 0 769 916 B1**
(45) Date of publication and mention of the grant of the patent: **13.06.2001**
(21) Application number: 94920533.0
(22) Date of filing: 08.07.1994
(51) Int. Cl.: A23L 1/212, A23L 1/214, A23L 1/217

(54) **VEGETABLE CRISPS AND METHOD FOR THEIR PRODUCTION**
GEMÜSECHIPS UND VERFAHREN ZU IHRER HERSTELLUNG
CHIPS A BASE DE LEGUMES ET LEUR PROCEDE DE PRODUCTION

(43) Date of publication of application: 02.05.1997
(73) Proprietor: Jakes, Clifford Duncan, Lymington, Hampshire S041 5SH (GB)
(72) Inventor: Dorricott, David, Addlestone, Weybridge, Surrey KT15 2JY (GB); Gayler, Paul, Leigh-on-Sea, Essex SS9 2RD (GB)
(74) Representative: Stebbing, Peter John Hunter
(86) International application number: GB9401488
(87) International publication number: WO9502336

(56) References cited:
- WO-A-82/01808
- WO-A-87/04599
- WO-A-87/06799
- WO-A-89/04120
- FR-A- 2 606 976
- GB-A- 1 288 532
- US-A- 2 056 884
- US-A- 2 401 392
- US-A- 3 510 314
- W.F. TALBURT 'Potato Processing' 1975 , AVI , WESTPORT - USA Pages 332 333, 341, 342, 348, 349, 365-369 see page 341, paragraph 2 see page 348, paragraph 3 - page 349, paragraph 2 see page 367, paragraph 2 see page 369, paragraph 3 -paragraph 4
- JOURNAL OF THE SCIENCE OF FOOD AND AGRICULTURE, vol.39, no.1, 1987, BARKING GB page 59-71 K.C.M. RAJA:
- B. HOLLAND: 'McCance and Widdowson's Composition of Foods' 1992 , ROYAL SOCIETY OF CHEMISTRY , CAMBRIDGE - GB Pages 225, 229, 249, 253, 261, 265, 269 see items n . 660-687, 741, 754, 799, 806, 819, 821, 833

## Description

The present invention relates to vegetable crisps and a method for their production.

The production of potato crisps is well known and well explored. There are however particular production problems relating to potato crisps relating essentially to the high proportion of starch in a potato product. For this reason various chemicals and other methods of blanching are required and primary and secondary and indeed even tertiary drying steps are utilized in order to provide a desired product. Such numbers of drying steps are unnecessary for vegetable crisps if the process is well thought through, and indeed counterproductive when low starch vegetable crisps formed of other materials other than potatoes are to be produced.

In GB-A-2099279 there is described the production of savoury crisps made by frying thin slices of raw carrot less than 2mm thick in an edible oil at about 185°C. Such a product is satisfactory when first made, but tends to take up moisture from the air and becomes flaccid unless stored even in really dry conditions.

One of the problems with the production of vegetables crisps has been that unlike where a single raw material has been used, the various raw materials require different treatments in order to make a friable crisp. Low starch raw materials require a drying step as well since otherwise the eventual product is likely to go flaccid during storage. Further, because of the wide range of materials used it is difficult to get a single production process which can be used on all batches of raw materials which result in a good product. In the present invention it is envisaged that crisps of various raw material types shall be mixed in a single bag and to this end they must not take up moisture from each other or from the air. This is difficult to achieve unless cooking and where necessary heat curing have essentially been completed in all cases.

It is also a problem that if a wide variety of raw materials are used it would normally be the situation that times, temperatures and other treatments would differ widely. The present invention seeks, to unify the process so that good friable crisps are made merely by using the same production techniques in each case but varying the dwell times of the raw materials during the cooking and where necessary the heat curing periods.

The applicants have now found that where vegetable crisps are made from raw materials having an initial starch content of over 15% and preferably over 20% by weight an excellent crisp can be made without requiring a heat curing step while maintaining good shelf life characteristics. Similarly they have also found that with raw materials having an initial starch content below 10% heat curing is necessary.

The present invention has a first object therefore the provision of vegetable crisps formed of one or more vegetables which have a good taste and maintain their friability for a considerable period when packaged.

A second aspect of the invention provides means whereby cooked vegetable crisps can be given a more certain shelf life by heat curing of the cooked product prior to packaging. Further a good quality comestible product can be produced by the methods of the present invention without any additives other than the raw vegetable material and cooking oil.

In a third aspect of the invention a method for the production of vegetable crisps is provided wherein the conditions for producing all the vegetable crisp types are substantially similar even though some of the cooking requirements for each raw material may differ, the arrangement being such that substantially only time periods are changed. This allows a production line to operate in constant conditions with the cooking step be adjusted by time rather than parameters. Thus succeeding batches of different raw materials can be cooked without altering the production line set up significantly. This allows different raw materials to be crisped and admixed with other batches without impairing shelf life.

Various attempts at the production of vegetable crisps have been reported.

US-A-3510314, US-A-2056884, GB-A-1288532, WO-A-82-01808 and Potato Processing; WF Talbot, Westport, 1975; all relate to methods for the production of crisps from materials such as sugarbeet, bananas, sweet potatoes, turnips, parsnips, swedes, carrots and potatoes and all reveal a slicing step to a thickness of, for example 1.6mm, followed by a cooking step at a temperature in our claimed range.

According to the present invention there is provided a method for the production of a vegetable crisp with a long shelf-life which, without preblanching, comprises cleaning and slicing raw materials to a thickness of lmm to 3mm, cooking said raw material in a selected refined cooking oil at a temperature between 120°C to 180°C, and subsequently allowing said product to drain,
characterized in that where the starch content of the original raw material is below 10% by weight, the cooked product is subjected to a heat curing step of at least 30° to 80°C for a period of time sufficient to prolong shelf life by preventing greasiness and by removal of residual moisture, or where the starch content of the original raw material raw material is above 15% by weight selecting the raw material from taro, eddoe, cassava, dasheen, coco, plantain and colacassi, and that in both cases the resultant crisp product is packaged.

In a preferred form of the invention the raw material is selected so as to have a starch content below 4% and a sugar content between 1.2% and 10.5%. The raw material may be selected from any one or more of carrot, turnip, swede, parsnip, celeriac, amba haldhi, sweet potato (white; African), sweet potato (orange; American) and beetroot. The refined vegetable oil may be a sunflower oil and or a refined vegetable/peanut oil mixture. In such an arrangement the cooking conditions may comprise a temperature in the range of 150°C to 170°C preferably for a time period of 70 to 180 seconds.

In another form the invention the raw material may be selected from a vegetable having a starch content between 20 and 30% by weight, and is selected from at least one of taro, eddoes, cassava, dasheen, coco, plantain and colacassi.

The refined vegetable oil may be sunflower oil or a refined vegetable/peanut oil mixture.

The heat curing step where applicable may also be time delimited dependent upon the heat curing step selected. The heat curing step may optionally be used for the high starch raw material, particularly the draining and/or centrifugation step; the heat curing step can in these circumstances increase shelf life measurably if this is required. Heat curing may include a draining and/or a centrifugation step inter alia to remove surplus oil prior to the heat curing process. The heat curing step may be effected at a temperature of 60°C to 80°C preferably for a period of 30 to 90 minutes. The preferred form of this heat curing step is effected at about 72°C to give a curing time of between 40 and 80 minutes.

The cooking conditions may be 150° to 170°C preferably for 90 to 180 seconds dependent on the raw material selected. It will be appreciated that lower temperatures can be used, in which case the cooking time tends to rise. This has the effect of prolonging the manufacturing process. A higher temperature above 180°C however tends to results in burnt flavours at least in some of the final vegetable crisps and we have found by experiment that 150° to 180°C preferably for 90 to 180 seconds is an ideal range for the particular vegetable oil (sunflower oil).

The removal of any excess oil is preferably affected by draining and/or by centrifugation. Centrifugation is best carried out in a plurality of steps each of which incorporate a "fluffing-up" stage at the end of each centrifugation stage. The fluffing-up procedure involves the separation of the slices before re-centrifugation.

It will be appreciated that such methods of production allow a production line to be set up for the production of different batches of raw materials for forming vegetable crisps. The only parameter which needs to be altered therefore is time which can be more readily controlled than temperature, original moisture content etc.

The present invention also comprehends a method for ascertaining the suitability of a vegetable raw material for conversion into a vegetable crisp without the necessity for a heat curing step which method comprises assaying the starch content of the raw material whereby those materials with a starch content under 10% are designated as a requiring a heat curing step, those with a starch content over 15% are designated as those not requiring the heat curing step.

Thus, one aspect of this invention provides low starch crisps alone or in admixtures, for example as follows:-

The invention may provide a packaged celeriac crisp comprising 25% to 30% starch, 6.5% to 8.5% sugar and up to 4% moisture, all by weight.

Accordingly, the present invention may provide a carrot crisp which comprises 0.5% to 1.5% starch, 8.5% to 10.5% sugar and up to 4.5% moisture, all by weight.

The invention may also provide a packaged turnip crisp comprising 1.4% to 2.9% starch, 6.5% to 8.5% sugar and up to 3% moisture, all by weight.

The invention may also provide a packaged swede crisp comprising 4.3% to 5.9% starch, 10% to 12% sugar and up to 3% moisture, all by weight.

The invention may also provide a packaged parsnip crisp comprising 9.5% to 11.5% starch, 13% to 16% sugar and up to 4% moisture, all by weight.

The invention may also provide a packaged sweet potato (white) crisp comprising 3% to 5% starch, 11% to 13% sugar and up to 2.5% moisture, all by weight.

The invention may also provide a packaged sweet potato (orange) crisp comprising 4% to 6% starch, 9.5% to 11.5% sugar and up to 3% moisture, all by weight.

The invention may also provides a packaged amba haldhi crisp comprising 8% to 10% starch, 9% to 11.5% sugar and up to 5% moisture, all by weight.

The invention may also provides a packaged beetroot crisp comprising 1% to 5% starch, 10% to 12% sugar and up to 5% moisture, all by weight.

In a further aspect the invention can provide high starch crisps for use alone or in admixture with themselves or with the above low starch crisps.

Thus, the invention may also comprehend a packaged taro crisp comprising 42% to 45% starch, 3% to 5% sugar and up to 3.5% moisture; all by weight.

The invention may also comprehend a packaged eddoe crisp comprising 45% to 47% starch, 2.5% to 4.5% sugar, and up to 4% moisture, all by weight.

The invention may also provide a packaged cassava crisp comprising 50% to 53% starch, 3% to 5% sugar, and up to 4% moisture, all being by weight.

The invention may also provide a packaged dasheen crisp comprising 48% to 51% starch, 3% to 5% sugar, and up to 3.5% moisture; all by weight.

The invention may also provide a packaged coco crisp comprising 45% to 48% starch, 2% to 4% sugar, and up to 3% moisture, all by weight.

The invention may also provide a packaged plantain crisp comprising 52 to 56% starch, 3 to 5% sugar, and up to 2.5% moisture, all by weight.

The invention may finally provide a packaged colacassi crisp comprising 43% to 47% starch, 2% to 4% sugar, and up to 5% moisture, all by weight.

In each case the crisp may be cooked in a refined vegetable oil such as sunflower oil and/or may be added on a 50/50 basis to peanut oil. The crisp batches may in each case be subjected to a heat curing step after cooking as hereinbefore described.

The invention will now be described by way of illustration only, with reference to the following examples.

### EXAMPLE 1

A plurality of vegetable raw materials was selected from those having a starch content below 4% by weight. These were as follows:-
carrot, turnip, swede, parsnip, celeriac, amba haldhi, sweet potato (white), sweet potato (orange) and beetroot. These were peeled and cleaned as necessary and sliced into pieces of about 1.5mm and as near as possible into neat rounds, and kept separate from each other and particularly from other vegetables to avoid staining. Each batch of sliced vegetable is then cooked in a refined sunflower oil at a temperature of 160°C for the length of time depending upon the vegetable used. The cooking time is shown in the Table, the upper figure of 160°C being the initial cooking temperature, whereas the lower figure is the temperature to which the oil may fall as a result of contact with cold moist slices, the temperature fall rising again to the predetermined value.

Shown in Table 1 is the cooking time. This in respect of the carrot for example, is 80 seconds but in respect of the swede is for example, 170 seconds. It will thus be seen that by utilising a selected raw material type with a starch content below a predetermined value and a standardised cooking temperature is possible by alteration of the time to cook a wide variety of raw materials successfully into crisps.

The heat curing step usually commences with a short drainage period of between 5 and 10 minutes. Thereafter a heat curing temperature is selected, in this case 72°C. A thin layer of the cooked components are spread under a heat lamp or in a heated cupboard or at least in a heat curing facility for a heat curing time period.

The curing time may be between 40 and 80 minutes at 72°C. Other temperatures and times may also be used. For example, the drying time at about 30°C will be at about 8 hours but at temperatures much higher than 72°C there is a risk that some of the cooked raw materials may acquire a burnt flavour. Although temperatures higher than 72°C can be utilised, higher levels of skill and knowledge are required to provide consistent products.

In the heat curing facility an absorbative base such as a paper sheet may be positioned to assist in the removal of excess cooking product and oil by absorption.

If reference is made to Table 1 below the parameters of the raw materials, the treatment and the final moisture content are given. It will be noted that in all cases that the moisture content is always below 4% and in many cases below 3%. This assists in providing the product with a long shelf life.

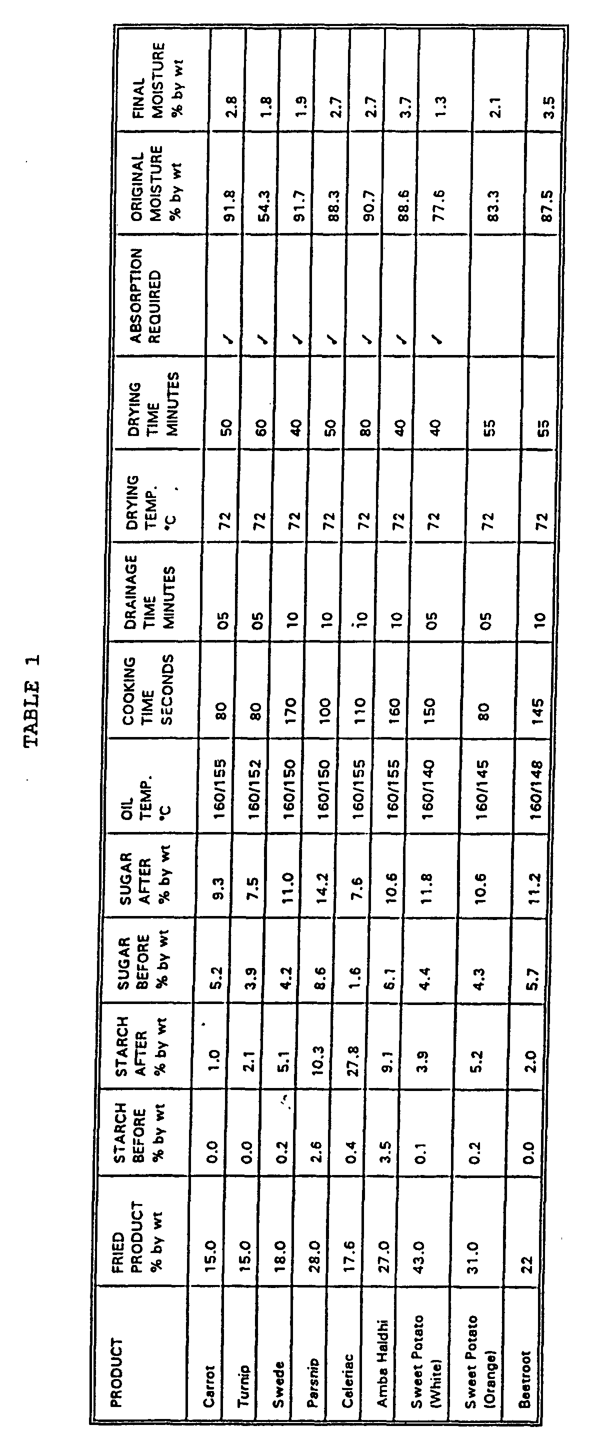

### EXAMPLE 2

A vegetable matrix is selected from the following raw materials:-
taro, eddoe, cassava, dasheen, coco, plantain and colacassi.

These are selected according to availability and season and are subsequently peeled or cleaned as appropriate. The vegetables are then sliced into slices of about 1.5mm, preferably into neat rounds, and kept separate from each other and particularly from other vegetables with colouring, in order to avoid staining.

Each batch of sliced vegetables is then cooked by frying in a refined vegetable oil at a temperature of 160°C for a length of time depending on the vegetable used.

For example, the following frying times are given for raw materials of 1.5mm thickness at 160°C:-
- Taro -: about 100 seconds;
- Eddo -: about 160 seconds;
- Cassava -: about 135 seconds;
- Dasheen -: about 105 seconds;
- Coco -: about 160 seconds;
- Plantain -: about 100 to 120 seconds depending upon texture; and
- Colacassi -: about 160 seconds

Generally, use of about 20% higher and lower than these figures are also useful.

It will be noted the timings, and only the timings, will change depending upon the initial moisture content of the vegetable raw material chosen.

When cooking has been effected the vegetable crisps when formed, are removed from the oil and all excess oil is drained off. In the preferred form of invention, the draining is substituted by, or succeeded by, a centrifugation step in which each batch of cooked vegetables are centrifuged for a period, fluffed-up, i.e. manually or chemically re-separated, and centrifuged again. The fluffing-up process may be done once or twice or more depending upon the initial raw material. The refined vegetable oil recovered may be used again.

The high starch vegetable crisps in accordance with this invention do not need a heat curing step as generally required for the low starch crisps and accordingly subsequent to the cooking stage the crisps may be allowed to cool to proceed to packing in the usual way.

The precise parameters are the production of the high starch crisps are given in Table 2 below.

The products of Examples 1 and 2 may be added together at the packaging stage to form a readily vendible product with both high and low starch crisps therein, all with a long shelf life.

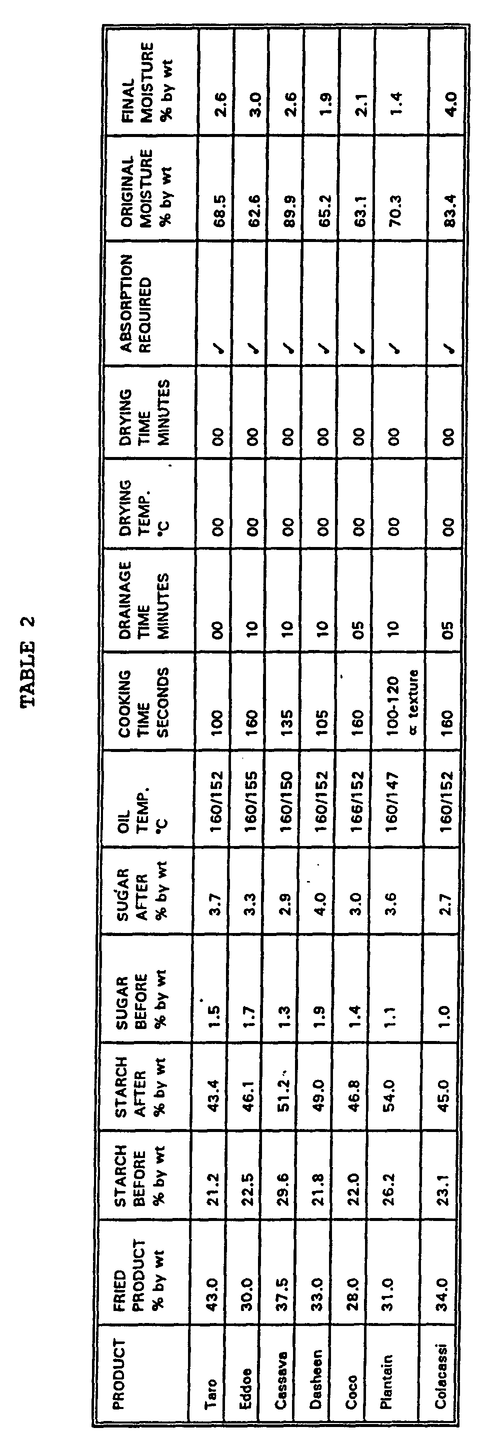

## Claims

1. A method for the production of a packaged vegetable crisp with a long shelf-life, without preblanching, which comprises cleaning and slicing raw materials to a thickness of lmm to 3mm, cooking said raw material in a selected refined cooking oil at a temperature between 120°C to 180°C, and subsequently allowing said product to drain,
characterized in that where the starch content of the original raw material is below 10% by weight the cooked product is subjected to a heat curing step of at least 30° to 80°C for a period of time sufficient to prolong shelf life by reduction of greasiness and of residual moisture, or where the starch content of the original raw material raw material is above 15% by weight, the raw material is selected from taro, eddoe, cassava, dasheen, coco, plantain and colacassi, and in that in both cases the resultant crisp product is packaged.

2. A method according to claim 1 wherein the raw material has a starch content above 15% by weight and is subjected after cooking to a heat curing step at 30°to 80°C for a period sufficient to assist residual moisture reduction.

3. A method according to claims 1 or 2 wherein the cooking temperature is between 150°C and 170°C, wherein the refined cooking oil is a vegetable oil and/or a peanut oil, and the time period is between 60 and 200 seconds.

4. A method according to claim 1 wherein the original raw material has a starch content below 10% by weight.

5. A method according to any preceding claim wherein the conditions for producing each raw material type of vegetable crisp are substantially the same with the exception of time periods individually selected on the basis of the raw materials selected.

6. A method according to either of claims 4 or 5 wherein the raw material is selected from any one or more of carrot, turnip, swede, parsnip, celeriac, amba haldhi, sweet potato (white), sweet potato (orange) and beetroot.

7. A method according to any preceding claim which includes the steps of draining and/or a centrifugation step to remove surplus oil from the cooked products.

8. A method according to any of claims 4 to 7 wherein the heat curing step is effected at a temperature of 60°C to 80°C.

9. A method according to any preceding claim wherein the centrifugation step is utilized to remove surplus oil; said centrifugation being effected in at least one stage which terminates in "fluffing up".

10. A packaged crisp made by the method of claim 1 and having been subjected to a heat curing step after cooking.

11. An admixture of packaged crisps formed by a method of claims 1 to 10.

## Patentansprüche

1. Verfahren zur Herstellung von abgepackten Chips aus pflanzlichen Materialien mit einer langen Haltbarkeit ohne Vorblanchieren, bei dem die Rohmaterialien gereinigt und auf Dicke von 1 mm bis 3 mm in Scheiben geschnitten werden, das Rohmaterial in einem ausgewählten raffinierten Speiseöl bei einer Temperatur zwischen 120°C bis 180°C gekocht wird und anschließend das Erzeugnis abtropfen gelassen wird,
**dadurch gekennzeichnet,** daß dann, wenn der Stärkegehalt des ursprünglichen Ausgangsmaterials kleiner als 10 Gew.-% ist, das gekochte Erzeugnis einem Wärmebehandlungsschritt bei wenigstens 30°C bis 80°C während eines Zeitraums unterworfen wird, welcher ausreichend ist, um die Haltbarkeit durch Reduktion der Fettigkeit und der restlichen Feuchtigkeit zu verlängern, oder dann, wenn der Stärkegehalt des ursprünglichen Ausgangsrohmaterials größer als 15 Gew.-% ist, das Rohmaterial aus der Gruppe gewählt wird, welche Taro, Eddoe (Wasserbrotwurzel), Cassava, Dasheen (Wasserbrotwurzel), Kokosnuß, Plantago und Colocasia gewählt wird, und daß in beiden Fällen das erhaltene Chiperzeugnis abgepackt wird.

2. Verfahren nach Anspruch 1, bei dem das Rohmaterial einen Stärkegehalt größer als 15 Gew.-% hat, und nach dem Kochen einem Wärmebehandlungsschritt bei 30°C bis 80°C während einer so ausreichenden Zeit ausgesetzt wird, daß die Reduktion der Restfeuchtigkeit unterstützt wird.

3. Verfahren nach Anspruch 1 oder 2, bei dem die Kochtemperatur zwischen 150°C und 170°C liegt, und das raffinierte Speiseöl ein pflanzliches Öl und/oder ein Erdnußöl ist, und der Zeitraum in einem Bereich zwischen 60 und 200 Sekunden liegt.

4. Verfahren nach Anspruch 1, bei dem das ursprüngliche Rohmaterial einen Stärkegehalt kleiner als 10 Gew.-% hat.

5. Verfahren nach einem der vorangehenden Ansprüche, bei dem die Bedingungen zur Herstellung von Chips aus pflanzlichen Materialien bei jeglicher Rohmaterialsorte im wesentlichen gleich sind mit der Ausnahme der Zeitperioden, die individuell auf der Basis der gewählten Rohmaterialien gewählt werden.

6. Verfahren nach Anspruch 4 oder 5, bei dem das Rohmaterial aus der Gruppe einzeln oder mehrere Bestandteile umfassend gewählt wird, welche Karotten, weiße Rüben, Steckrüben, Pastinakwurzeln, Sellerie, Amba Haldhi, Süßkartoffeln (weiß), Süßkartoffeln (orange) und rote Rüben umfaßt.

7. Verfahren nach einem der vorangehenden Ansprüche, welches die Schritte umfaßt, gemäß denen eine Ablaufbehandlung und/oder eine Zentrifugenbehandlung durchgeführt wird, um das überschüssige Öl von dem gekochten Erzeugnis zu entfernen.

8. Verfahren nach einem der Ansprüche 4 bis 7, bei dem der Wärmebehandlungsschritt bei einer Temperatur von 60°C bis 80°C durchgeführt wird.

9. Verfahren nach einem der vorangehenden Ansprüche, bei dem der Zentrifugalbehandlungsschrift zur Entfernung von überschüssigem Öl angewandt wird, und das Zentrifugieren wenigstens in einer Stufe bewirkt, so daß dieser Abschluß mit einer "Auflockerung" abgeschlossen wird.

10. Verpacktes Chipgut, welches gemäß dem Verfahren nach Anspruch 1 hergestellt ist und einen Wärmebehandlungsschritt nach dem Kochen unterzogen ist.

11. Gemisch aus abgepackten Chiperzeugnissen, welche gemäß dem Verfahren nach einem der Ansprüche 1 bis 10 hergestellt sind.

## Revendications

1. Procédé de fabrication de chips de légume sous emballage, présentant une longue durée de conservation, sans préblanchiment, qui comprend les opérations consistant à nettoyer et trancher les matières premières à une épaisseur de 1 mm à 3 mm, à faire cuire ladite matière première dans une huile de cuisson raffinée choisie, à une température comprise entre 120°C et 180°C, puis à faire s'égoutter ledit produit,
caractérisé par le fait que, si la teneur en amidon de la matière première initiale se situe au-dessous de 10% en poids, le produit cuit est soumis à une étape de durcissement à la chaleur d'au moins 30° à 80°C pendant une période de temps suffisante pour prolonger la durée de conservation par réduction de l'état graisseux et de l'humidité résiduelle, ou, si la teneur en amidon de la matière première initiale se situe au-dessus de 15% en poids, la matière première est choisie parmi le taro, l'eddoe, le manioc, le dasheen, le coco, le plantain et le colacassi, et par le fait que, dans les deux cas, le produit sous forme de chips résultant est emballé.

2. Procédé selon la revendication 1, dans lequel la matière première a une teneur en amidon se situant au-dessus de 15% en poids et est soumise, après cuisson, à une étape de durcissement à la chaleur à 30° à 80°C pendant une période de temps suffisante pour aider à la réduction de l'humidité résiduelle.

3. Procédé selon l'une des revendications 1 ou 2, dans lequel la température de cuisson se situe entre 150° et 170°C, dans lequel l'huile de cuisson raffinée est une huile végétale et/ou une huile d'arachide, et la période de temps se situe entre 60 et 200 secondes.

4. Procédé selon la revendication 1, dans lequel la matière première initiale a une teneur en amidon se situant au-dessous de 10% en poids.

5. Procédé selon l'une quelconque des revendications précédentes, dans lequel les conditions de fabrication de chaque type de matière première de chips de légume sont sensiblement les mêmes à l'exception de périodes de temps choisies individuellement sur la base des matières premières choisies.

6. Procédé selon l'une ou l'autre des revendications 4 et 5, dans lequel la matière première est choisie parmi une ou plusieurs parmi la carotte, le navet, le choux-navet, le panais, le céleri-rave, l'amba haldhi, la patate douce (blanche), la patate douce (orange) et la betterave potagère.

7. Procédé selon l'une quelconque des revendications précédentes, qui comprend les étapes d'égouttage et/ou une étape de centrifugation pour éliminer l'excédent d'huile à partir des produits cuits.

8. Procédé selon l'une quelconque des revendications 4 à 7, dans lequel l'étape de cuisson à la chaleur est effectuée à une température de 60°C à 80°C.

9. Procédé selon l'une quelconque des revendications précédentes, dans lequel l'étape de centrifugation est utilisée pour éliminer l'excédent d'huile, ladite centrifugation étant effectuée en au moins une étape qui se termine en "effilochage".

10. Chips sous emballage obtenues par le procédé tel que défini à la revendication 1 et ayant été soumises à une étape de durcissement à la chaleur après cuisson.

11. Mélange de chips sous emballage formées par un procédé tel que défini à l'une des revendications 1 à 10.
